# EUROPÄISCHE PATENTSCHRIFT

(11) **EP 0 402 785 B1**
(45) Veröffentlichungstag und Bekanntmachung des Hinweises auf die Patenterteilung: **07.12.1994**
(21) Anmeldenummer: 90110879.5
(22) Anmeldetag: 08.06.1990
(51) Int. Cl.: C08L 97/02

(54) **Verfahren zur Herstellung eines Formkörpers aus verpressten Teilchen und Phenolharz**
Method for preparation of a moulded article from compressed particles and phenol resin
Procédé de préparation d'un article moulé à base de particules comprimées et une résine phénolique

(30) Priorität: 16.06.1989 DE 3919756
(43) Veröffentlichungstag der Anmeldung: 19.12.1990
(73) Patentinhaber: HOECHST AKTIENGESELLSCHAFT, 65926 Frankfurt am Main (DE)
(72) Erfinder: Hemels, Martin H.A., NL-5556 VA Valkenswaard (NL); Schuren, Geert W., NL-6097 BT Heel (NL); Driessen, Louis G.M., B-3540 Zolder (BE)

(56) Entgegenhaltungen:
- EP-A- 0 081 147
- GB-A- 1 430 343
- US-A- 4 195 019
- CHEMICAL ABSTRACTS, Band 106, Nr. 18, 4. Mai 1987, Seite 40, ZusammenfassungNr. 139312d, Columbus, Ohio, US; & JP-A-61 250 050

## Beschreibung

Die Erfindung betrifft ein Verfahren zur Herstellung eines Formkörpers mit einem gepreßten Kern aus festen, inerten Teilchen, auf der Basis von Holz, Cellulose, Kunststoff oder anorganischem Material, die von hitzegehärtetem Phenolharz umgeben sind.

Aus der GB-A 1.430.343 ist ein Verfahren zur Herstellung eines Formkörpers aus dem Reaktionsprodukt aus Phenol und einer Formaldehyd abspaltenden Verbindung bekannt. Das Reaktionsgemisch enthält als Lösungsmittel und Plastifizierungsmittel einen ein- oder zweiwertigen Alkohol mit 2 bis 8 C-Atomen. Der Alkohol bewirkt eine vollständige Reaktion zwischen dem Phenol und der Formaldehy abspaltenden Verbindung, die Bis-hydroxyaryl-alkane nicht enthält. Sind weniger als 1 % Alkohol in dem Reaktionsgemisch vorhanden, so wird die Umsetzung der phenolischen Verbindungen zu den Reaktionsprodukten negativ beeinflußt.

Ein Formkörper als dekorative Bauplatte wird in der EP-A - 0 081 147 (US-A - 4,503,115) beschrieben. Die Bauplatte besteht aus einem gepreßten Kern aus Holzfasern, die von hitzegehärtetem Phenol-Formaldehyd-Harz umgeben sind. Zur Herstellung dieses Formkörpers werden die Holzfasern mit einer wäßrigen alkalischen Lösung des hitzehärtbaren Phenol-formaldehyd-Harzes beschichtet oder imprägniert und die beschichteten Holzfasern in der Hitze verpreßt, wobei das Harz aushärtet.

Dieses Verfahren zeigt verschiedene Nachteile. So muß die Lösung des Phenol-Formaldehyd-Harzes in einer Vorstufe aus den Einzelkomponenten getrennt hergestellt werden. Das Lösungsmittel für das noch lösliche Phenol-Formaldehyd-Harz muß in einer besonderen Verfahrensstufe vor dem Verpressen von den Holzfasern entfernt werden. Hierbei besteht die Gefahr, daß zusammen mit dem Lösungsmittel auch flüchtige niedermolekulare Umsetzungsprodukte von Phenol und Formaldehyd und noch nicht umgesetztes Phenol und Formaldehyd entfernt werden. Infolgedessen ist eine aufwendige Reinigung des Abwassers und der Abluft erforderlich. Schließlich besteht beim Verpressen der Holzfasern in der Hitze die Gefahr, daß das infolge der Reaktion des Formaldehyds entstehende Wasser schlagartig entweicht und dadurch den entstandenen verpreßten Körper zum Platzen bringt.

Aufgabe der Erfindung ist es, ein Verfahren zur Herstellung von Formkörpern zur Verfügung zu stellen, das ohne Lösungsmittel für die Phenol-Formaldehyd-Harze gute Ergebnisse liefert.

Die Lösung dieser Aufgabe zeichnet sich dadurch aus, daß ein Bindemittel aus Feststoffteilchen aus phenolischen Verbindungen auf der Basis von Bis-hydroxyarylalkanen und wenigstens eine Formaldehyd abspaltende Verbindung, wobei weder die phenolischen Verbindungen noch die Formaldehyd abspaltende Verbindung Wasser oder ein anderes Lösungsmittel enthalten, sowie einen Katalysator und gegebenenfalls Fließmittel, Farbpigmente, Hydrophobierungsmittel, Trennmittel, Flammschutzmittel und/oder Additive zur Verbesserung der Hitzebeständigkeit der phenolischen Verbindungen zusammen mit den inerten Teilchen im trockenen Zustand gemischt werden und die erhaltene Teilchenmischung zu dem Formkörper verpreßt wird, wobei während der Verpressung unter Hitzeeinwirkung die vollständige Vernetzung des Phenolharzes erfolgt.

Demnach werden zur Herstellung des Formkörpers inerte Teilchen im trockenen Zustand mit einem Bindemittel aus Feststoffteilchen aus einem Bisphenol und wenigstens einer Formaldehyd abspaltenden Verbindung, sowie einem Katalysator, d.h. einem die Aushärtung und Vernetzung katalytisch beschleunigendem Mittel, und gegebenenfalls weiteren bei der Phenolharzherstellung üblichen Additiven gemischt und die erhaltene Mischung, gegebenenfalls nach einer Vorverdichtung und Vorformung, zu dem Formkörper verpreßt, wobei während der Verpressung unter Hitzeeinwirkung die vollständige Aushärtung und Vernetzung des Bisphenols mit Formaldehyd zu einem wasserunlöslichen, nicht mehr schmelzbaren Phenolharz erfolgt. Die vom Verfahrensanspurch 1 abhängigen Ansprüche geben zweckmäßige Weiterbildungen des Verfahrens an.

Als phenolische und als vernetzende Komponenten des Bindemittls für die inerten Teilchen werden nach diesem Verfahren bei Raumtemperatur im wesentlichen schwer- oder nicht-flüchtige Stoffe verwendet, nämlich phenolische Verbindungen auf der Basis von Bis-hydroxyaryl-alkanen, und wenigstens eine Formaldehyd abspaltende Verbindung. Die verschiedenen Komponenten des Bindemittels werden mit den inerten Teilchen gemischt und reagieren beim Verpressen der Teilchen unter Hitzeeinwirkung zu einem unlöslichen dreidimensional vernetzten Phenolplastharz.

Zur Beschleunigung der Aushärtung und Vernetzung des Phenolharzes werden die bei der Polykondensation von phenolischen Verbindungen mit Formaldehyd üblichen, vorzugsweise basischen Katalysatoren in der jeweils wirksamen Menge eingesetzt. Bevorzugte Katalysatoren sind Calciumoxid, Natriumhydroxid, Lithiumhydroxid und Kaliumhydroxid. Gegebenenfalls werden weitere bei der Herstellung von Phenolharzen übliche Additive, wie Fließmittel, Farbpigmente, Hydrophobierungsmittel, Trennmittel, Flammschutzmittel, wie Aluminiumtrihydrat oder Additive zur Verbesserung der Hitzebeständigkeit der phenolischen Verbindungen zugesetzt.

Die zur Herstellung des Formkörpers verwendeten festen inerten Teilchen reagieren mit dem Bindemittel nicht oder nur in geringem Maß und werden unter dem bei der Verpressung auftretenden Druck praktisch nicht verformt. Die Teilchen sind z.B. auf Basis von Holz, Cellulose, Kunststoff oder anorganischem Material, z.B. Gesteinspulver oder -fasern aufgebaut und werden zusammen mit dem Gemisch aus Bisphenol und Formaldehyd abspaltender Verbindung in der Hitze verpreßt. In bevorzugter Ausführungsform bestehen die Teilchen aus Holzfasern und/oder Cellulosefasern, insbesondere aus Holzfasern mit 0 bis 40 Gew.-% Cellulosefasern, bezogen auf das Gesamtgewicht der Fasern. Die Holzfasern werden hergestellt aus Holzarten, die eine Zerfaserung erlauben. Zur Herstellung von Holzfasern wird das Holz in einer Mühle zu Holzschnitzeln zerkleinert, die erhaltenen Holzschnitzel mit Wasserdampf unter einem Wasserdampfdruck von 1 bis 10 bar in wenigen Minuten erweicht und anschließend, z.B. zwischen zwei beweglichen Scheiben, zu Holzfasern zerkleinert. Die erhaltenen Holzfasern werden vor dem Vermischen mit den harzbildenden Komponenten vorzugsweise auf einen Wassergehalt von kleiner als 10 % getrocknet. Die faserförmigen inerten Teilchen, insbesondere die Holzfasern und Cellulosefasern haben eine Lange von 0,3 bis 20 mm, eine mittlere Länge von 0,5 bis 3 mm und einen mittleren Durchmesser von 0,025 bis 0,05 mm. Der Durchmesserbereich liegt im Bereich von 0,01 bis 1 mm.

Zusätzlich zu oder anstelle von Holzfasern können auch gröbere Lignocellulose enthaltende Teilchen wie Holzspäne, Holzmehl, Holzschliff oder Teilchen von anderen Naturprodukten wie Baumwolle, Stroh und dergleichen verwendet werden, wie sie z.B. in der Industrie oder in holzverarbeitenden Werkstätten als Abfall anfallen. Ebenso können zusätzlich zu oder anstelle von Holzteilchen Kunststoffteilchen, z.B. in Form von Granulat oder Fasern, eingesetzt werden. Celluloseteilchen werden durch chemischen Aufschluß von Holzfasern erhalten, wobei wasserlösliche Anteile im Holz sowie die Lignocellulose entfernt wird.

Geeignete Bisphenole sind in Ullmann, 4. Auflage, 18, S. 215 ff. beschrieben. Bisphenole sind Bis(hydroxyaryl)alkane. Besonders bevorzugt sind Bis(hydroxyphenyl)alkane mit 1 bis 6, insbesondere 1 bis 4 C-Atomen in der Alkankette. Die Hydroxygruppe im Hydroxyphenylrest befindet sich in 2- und/oder 4-Stellung. Der Hydroxyphenylrest ist gegebenenfalls durch eine oder zwei niedrige Alkylgruppen, insbesondere mit 1 bis 3 C-Atomen, in der 3- und/oder 5-Stellung substituiert. Auch Cycloalkane, insbesondere Cyclohexane, sind geeignet. Beispiele für diese Verbindungen sind
2,2′-Bis(4-hydroxyphenyl)butan, bzw. -propan
2,2′-Bis(3-methyl-4-hydroxyphenyl)butan bzw. -propan
Diese Verbindungen entstehen durch Kondensation von 1 Mol Keton, wie z.B. Aceton oder Cyclohexanon, oder Aldehyd mit 2 Mol Phenol-Verbindungen, welche gegebenenfalls mit einer oder zwei niedrigen Alkylgruppen substituiert sind.

Das Bisphenol kann auch in unreiner Form mit den Nebenprodukten und teerartigen Reaktionsrückständen, die üblicherweise bei seiner Synthese entstehen, eingesetzt werden. Diese Reaktionsrückstände enthalten weitere phenolische Verbindungen, die mit Formaldehyd zu nicht schmelzbaren Harzen reagieren.

Als schwer- bzw. nichtflüchtige Nebenprodukte entstehen z.B. bei der Umsetzung von Aceton und Phenol das isomere Bisphenol 2-(2-hydroxyphenyl)-2-(4-hydroxyphenyl)propan und die mit den Strukturformeln (a), (b), (c) dargestellten Chroman-Derivate 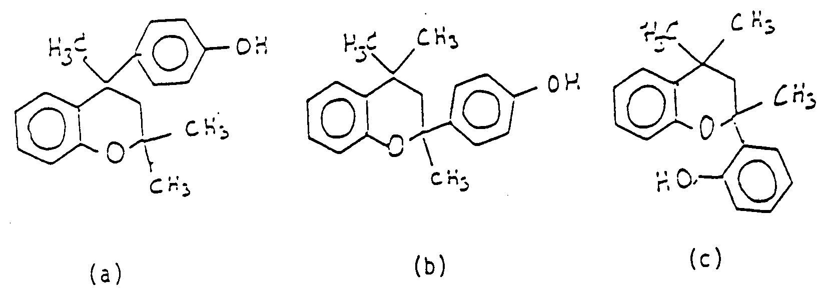
die mit den Formeln (d) und (e) erläuterten Indan-Derivate 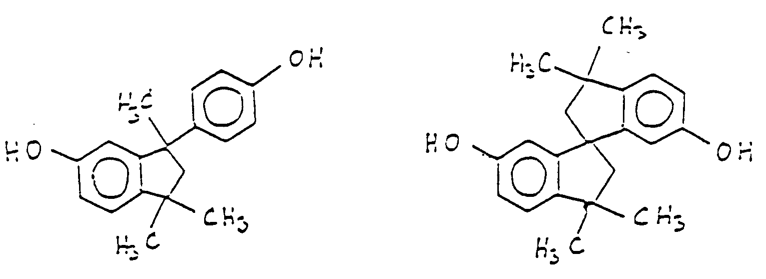
sowie Trisphenol mit der Formel (f) 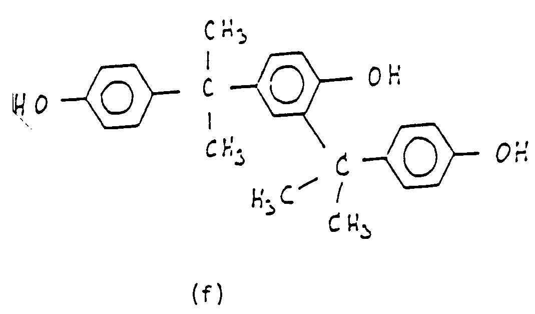
Als weitere schwer- bzw. nichtflüchtige Nebenprodukte enthalten die Reaktionsrückstände der Bisphenolherstellung noch geringe Mengen an Phenolpolymeren, aromatischen Feststoffen wie Dimethylxanthen sowie weiteren teerartigen Rückständen. Auch nicht umgesetztes Phenol kann in geringer Menge vorhanden sein.

Der Anteil des Bisphenols an der Gesamtmischung aus Bisphenol und Nebenprodukten ist gewöhnlich geringer als 80 Gew.-%, kann aber auch unter 50 Gew.-% liegen. Es ist sogar möglich, das zur Herstellung von gewissen Polymeren wie Polycarbonaten erforderliche Bisphenol A weitgehend, d.h. bis auf 20 %, insbesondere bis auf 30 bis 40 %, zu entfernen und das restliche Bisphenol A zusammen mit den z.B. für die Polycarbonatherstellung nicht brauchbaren Nebenprodukten, insbesondere mit dem teerartigen Rückstand als die phenolische Komponente des Bindemittels zu verwenden. Hierzu wird der Rückstand zunächst grob zerkleinert und dann auf die gewünschte mittlere Teilchengröße vermahlen. Im allgemeinen werden Bisphenol und die zerkleinerten Nebenprodukte der Bisphenolherstellung mit einer mittleren Teilchengröße von 40 bis 200, insbesondere 60 bis 150 Mikrometer eingesetzt.

Geeignete Formaldehyd abgebende Stoffe zersetzen sich oberhalb 80, insbesondere oberhalb 100 °C, so daß bei der Herstellung der Mischung aus inerten Teilchen und Bindemittel noch keine Reaktion eintritt. Es sind dies beispielsweise Paraformaldehyd, 1,3,5-Trioxan (Metaformaldehyd) und Oxazolidine wie z.B. 4,4-Dimethyloxazolidin, aber auch feste oder zumindest schwerflüchtige Verbindungen mit Methylolgruppen, die sich bei erhöhter Temperatur nach der Gleichung RCH₂OH→RH+HCHO zersetzen. Die besonders bevorzugte Formaldehyd abspaltende Verbindung ist Hexamethylentetramin. Es ist auch möglich, eine Mischung aus verschiedenen Formaldehyd abspaltenden Stoffen einzusetzen, welche sich vorzugsweise bei verschiedenen Temperaturbereichen zersetzen, z.B. Paraformaldehyd und Hexamethylentetramin. Dadurch läßt sich eine stufenweise Aushärtung und Vernetzung erreichen. Das Verhältnis des Gesamtgewichts aus Bisphenol oder Bisphenol und den gegebenenfalls vorhandenen Nebenprodukten der Bisphenolsynthese zum Gewicht der Formaldehyd abgebenden Stoffe, beträgt zweckmäßigerweise 1:0,1 bis 1:6, vorzugsweise 1:0,2 bis 1:1, insbesondere 1:0,2 bis 1:0,8.

Das Bisphenol und gegebenenfalls die bei der Bisphenolherstellung anfallenden Nebenprodukte und auch die bevorzugten Formaldehyd abgebenden Verbindungen enthalten kein Wasser oder andere Lösungsmittel. Nach dem Mischen dieses Bindemittel mit den inerten Teilchen ist kein Trocknungsverfahren zur Entfernung von Wasser oder irgendwelchen sonstigen Lösungsmitteln erforderlich.

Der Anteil der mit den inerten Teilchen vermischten Bindemittelkomponenten, bestehend aus Bisphenol, den gegebenenfalls zusätzlich vorhandenen schwerflüchtigen Nebenprodukten der Bisphenolherstellung und der Formaldehyd abgebenden Verbindung beträgt gewöhnlich 15 bis 90, insbesondere 20 bis 60 Gew.-%, bezogen auf das Gewicht der eingesetzten inerten Teilchen.

Die Herstellung der Mischung aus Bindemittel und inerten Teilchen erfolgt z.B. in einer Knetmaschine oder einer Mühle, wenn eine weitere Zerkleinerung der Bindemittelteilchen und/oder der inerten Teilchen erforderlich ist. Das Vermischen der Bindemittelkomponenten mit den inerten Teilchen erfolgt bei einer Temperatur, bei der noch keine Zersetzung der Formaldehyd abspaltenden Verbindung und folglich auch keine Vorkondensation eintritt. Diese Temperatur liegt gewöhnlich unter 100 °C, insbesondere bei 15 bis 35 °.

Zur Verpressung dieser Mischung unter Ausbildung eines flächenförmigen Formkörpers werden wegen der leichteren Handhabung zweckmäßigerweise in einer Vorstufe vorverdichtete und vorgeformte flächenförmige Prepregs eingesetzt. Zur Herstellung dieser Prepregs wird die erhaltene Mischung aus Bindemittelkomponenten und inerten Teilchen z.B. in eine Presse oder in eine Tiefziehanlage eingebracht und unter einem Druck von 10 bis 50, insbesondere 20 bis 40 bar sowie einer Temperatur von 10 bis 80, insbesondere 20 bis 50 °C zu platten-, tafel- oder folienförmigen vorverdichteten Prepregs vorgepreßt oder tiefgezogen. Es ist auch möglich, bei der Herstellung der Prepregs eine höhere Temperatur einzuhalten, bei der sich die Formaldehyd abspaltende Verbindung zersetzt und eine Reaktion zwischen dem Bisphenol und dem Formaldehyd eintritt. Bei Verwendung von Paraformaldehyd ist diese Temperatur z.B. 80 bis 160, insbesondere 90 bis 120 °C. Für diese als Vorkondensation bezeichnete Reaktion ist ein basischer Katalysator vorhanden. Es entstehen teilweise kondensierte, noch schmelzbare Oligomere aus linearen Kettenmolekülen, die Methylolgruppen enthalten und folglich bei der anschließenden Hitzeverpressung des Prepregs selbstvernetzend sind.

Die Mischung aus den noch nicht kondensierten Bindemittelkomponenten und den inerten Teilchen, bzw. die vorverdichteten Prepregs, in denen das Bindemittel gegebenenfalls vorkondensiert ist, werden anschließend in der Hitze unter dreidimensionaler Vernetzung der phenolischen Komponenten zum gewünschten Formkörper, z.B. zu Platten, Brettern, Balken, Stangen, Rohren oder Gehäusen verpreßt. Das bei dieser Hitzeverpressung aus der Reaktion der phenolischen Komponenten mit Formaldehyd entstandene Phenolharz ist weitgehend ausgehärtet. Es ist nicht mehr schmelzbar und befindet sich somit im C-Zustand. Sofern eine Vorkondensation durchgeführt worden ist, kann gegebenenfalls eine zweite Formaldehyd abspaltende Verbindung eingesetzt werden. Das in diesem Fall eingesetzte Gemisch enthält eine Formaldehyd abgebende Verbindung, die bei relativ niedriger Temperatur während der Vorkondensation zersetzt wird, und eine weitere Verbindung, die erst während der Hitzepressung bei höherer Temperatur Formaldehyd abspaltet. Eine für die Vorkondensation geeignete Verbindung ist z.B. Paraformaldehyd. Die zweite Verbindung ist bespielsweise Hexamethylentetramin, das sich bei Temperaturen oberhalb 160 °C zersetzt und Formaldehyd freimacht. Die Temperatur wird während der Hitzeverpressung im allgemeinen so gewählt, daß eine praktisch vollständige Aushärtung des Harzes erfolgt. Sie liegt gewöhnlich bei mindestens 120, vorzugsweise 130 bis 250, insbesondere 140 bis 200 °C.

Der erforderliche Preßdruck liegt im Bereich von 5 bis 100 bar, insbesondere 20 bis 80 bar und ist im Vergleich zum Stand der Technik gering, da während der Aushärtung kein Wasser abgespalten wird. Die Preßzeit ist abhängig von der Dicke des Formkörpers und der Temperatur und beträgt gewöhnlich 5 bis 30 min. Bei Verwendung von Prepregs mit vorkondensiertem Harz wird die Preßzeit entsprechend verringert.

Als Preßvorrichtungen können Tiefziehanlagen, kontinuierlich arbeitende Walzen oder taktweise arbeitende Plattenpressen eingesetzt werden. Diese Preßvorrichtungen zeigen eine glatte oder strukturierte Preßfläche und dienen zur Herstellung von flachen Platten oder besitzen eine profilartige Preßfläche und werden zur Herstellung von Platten mit profilartiger Form, z.B. in Form von Winkeln oder gewellten Platten, verwendet.

Der nach dem Verfahren erhaltene Formkörper ist eine flächenhafte Platte oder Folie, deren Oberflächenform dem Anwendungszweck angepaßt ist und die zum Beispiel gewinkelte, gebogene oder plane Form aufweist. Insbesondere ist der Formkörper ein Plattenkörper mit im wesentlichen ebener Fläche. Es sind aber auch profilförmige, stangenförmige oder rohrförmige Körper herstellbar.

Der fertiggestellte, vorzugsweise platten-, folien- oder profilförmige Körper mit der obengenannten Menge an Bindemittel von 15 bis 90 Gew.-% zeigt bei Verwendung von Holz- und/oder Celluloseteilchen eine Dichte von 600 bis 1450 kg/m³. In Platten- oder Folienform beträgt seine Dicke 0,5 bis 100, vorzugsweise 2 bis 40, insbesondere 2 bis 20 mm. In Abhängigkeit von der gewünschten Dicke des Formkörpers wird die Dicke der Prepregs vor der abschließenden Verpressung eingestellt.

Es ist auch möglich, die Prepregs vor dem Verpressen ein-oder beidseitig mit einer dekorativen Schicht aus einer Dekorfolie aus einem Gewebe, Vliesstoff, einer Kunststoff-, Papier- oder Holzfolie abzudecken, wobei die Dekorfolie mit einem hitzehärtbaren Harz, insbesondere mit einem Melamin-Formaldehydharz, bereits imprägniert ist. Zweckmäßigerweise zeigt die Dekorfolie ein Flächengewicht von 80 bis 400, insbesondere 120 bis 300 g/m². Das vorverdichtete Teilchengemisch des Prepregs wird dann zusammen mit der Dekorschicht unter den obengenannten Bedingungen in der Hitze unter Bildung eines dekorativen Formkörpers, insbesondere einer dekorativen Platte, verpreßt.

Dekorative Schichten können auch nach dem letzten Preßvorgang durch Kaschieren des Formkörpers mit entsprechenden Oberflächenfolien aufgebracht werden. Eine dekorative Oberfläche kann nachträglich auch durch Lackieren des Formkörpers erzeugt werden.

Zur Herstellung von kratzfesten und gegebenenfalls besonders witterungsbeständigen Oberflächen werden mit Elektronenstrahlen vernetzbare Harze, insbesondere vernetzbare aliphatische Polyurethanharze oder Polyesterharze, auf die Oberfläche des verpreßten Formkörpers aufgebracht und anschließend vernetzt. Die erhaltene Harzschicht wird gegebenenfalls einer Druckbehandlung unterworfen. Zur Erhöhung der dekorativen Wirkung enthalten diese Harzschichten ebenfalls Füllstoffe oder Farbstoffpigmente. Die Herstellung solcher Oberflächenschichten ist in der EP-A-0 166 153 und EP-A-0 216 269 beschrieben. Es ist auch möglich, die in den beiden Druckschriften beschriebenen dekorativen Platten als Oberflächenschicht für einen folien- oder plattenförmigen Formkörper der vorliegenden Erfindung zu verwenden.

Die Erfindung wird durch die nachfolgenden Beispiele näher erläutert. Es wurden bestimmt die Biegefestigkeit nach DIN 53 452, der E-Modul nach DIN 53 457, die Dichte nach DIN 53 479, die Wasseraufnahme und die Kantenquellung nach DIN 53 799.

### Beispiel 1

456 g Teilchen aus Bisphenol A werden mit 186 g teilchenförmigem Hexamethylentetramin, 3,46 g CaO als Katalysator und 2000 g trockenen Holzfasern bei 20 bis 100 °C homogen gemischt. Die Mischung wird gleichmäßig auf ein Preßblech aufgestreut und anschließend in einer geheizten Presse (180 °C) unter 80 bar Druck während 8 min. gepreßt. Die erhaltene Platte wird der Presse warm entnommen. Die Platte hat eine Dicke von 7 mm und zeigt die folgenden Eigenschaften:

| | |
|---|---|
| Biegefestigkeit | 127 N/mm² |
| E-Modul | 11000 N/mm² |
| Dichte | 1370 kg/m³ |
| Wasseraufnahme | 2,5 % (2 Stunden kochen) |
| Kantenquellung | 6,0 % (2 Stunden kochen) |

### Beispiel 2

Es werden 822 g von feingemahlenem Reaktionsrückstand aus der Herstellung von Bisphenol A durch Umsetzung von Aceton und Phenol mit der folgenden Zusammensetzung
30 Gew.-Teile Bisphenol A
16 Gew.-Teile 2-(2-hydroxyphenyl)-2-(4-hydroxyphenyl) propan
20 Gew.-Teile Chromanderivate
22,5 Gew.-Teile Indanderivate
7,5 Gew.-Teile Trisphenol
8 Gew.-Teile sonstige Phenolpolymere
zusammen mit
4,8 g NaOH als Katalysator
376 g Hexamethylentetramin
und
2000 g Holzfasern
bei 20 bis 100 °C gemischt, in eine Plattenform gestreut und anschließend in einer Presse (160 °C) während 16 min. unter 20 bar Druck gepreßt. Die erhaltene Platte ist 6 mm dick.

### Platteneigenschaften:

| | |
|---|---|
| Biegefestigkeit | 80 N/mm² |
| E-Modul | 7800 N/mm² |
| Dichte | 1100 kg/m³ |
| Wasseraufnahme | 3,5 % (2 Stunden kochen) |
| Kantenquellung | 5,0 % (2 Stunden kochen) |

### Beispiel 3

Die unter Beispiel 1 beschriebene Mischung aus Bindemittel und Holzfasern wird zu plattenförmigen Prepregs vorgeformt und vorverdichtet. Die Prepregs werden beidseitig mit einem melaminimprägnierten Dekorpapier versehen und anschließend unter den Bedingungen des Beispiels 1 verpreßt. Die Plattendicke ist 7,2 mm.

### Platteneigenschaften:

| | |
|---|---|
| Biegefestigkeit | 140 N/mm² |
| E-Modul | 14000 N/mm² |
| Dichte | 1350 kg/m³ |
| Wasseraufnahme | 1,3 % (2 Stunden kochen) |
| Kantenquellung | 3,0 % (2 Stunden kochen) |

### Beispiel 4

Die im Beispiel 2 beschriebene Mischung aus Bindemittel und Holzfasern wird zu plattenförmigen Prepregs vorgeformt und vorverdichtet. Die Prepregs werden vor dem Verpressen einseitig mit einem Dekorpapier versehen und anschließend unter gleichen Preßbedingungen wie im Beispiel 2 gepreßt. Das Dekorpapier ist bedruckt und mit einem Melaminharz getränkt. Auf der die äußere Oberfläche der Platte bildenden Seite besitzt das Dekorpapier eine transparente Schicht aus einem durch Elektronenstrahlen polymerisierten Kunstharz. Ein Dekorpapier mit dieser Klarschicht wird im Beispiel 1 der EP-A-0 166 153 beschrieben. Die erhaltene Platte ist 6,1 mm dick und hat folgende Eigenschaften:

| | |
|---|---|
| Biegefestigkeit | 100 N/mm² |
| E-Modul | 8300 N/mm² |
| Dichte | 1120 kg/m³ |
| Wasseraufnahme | 2,5 % (2 Stunden kochen) |
| Kantenquellung | 3,0 % (2 Stunden kochen) |

### Beispiel 5

Es wird eine Platte wie in Beispiel 4 hergestellt. Das Dekorpapier ist allerdings nicht bedruckt und besitzt zwei übereinanderliegende Schichten aus durch Strahlung polymerisiertem Kunstharz, wobei die äußere Schicht eine Klarschicht ist und die Zwischenschicht Farbpigmente enthält. Eine solche Oberfläche zeigt beispielsweise die Holzfasermatte des Beispiels 4 der EP-A-0 166 153. Die Platte zeigt die gleichen Eigenschaften wie die nach Beispiel 4 hergestellte.

### Beispiel 6

Die Zugabe von 16 Gew.-% Mono/Diammoniumphosphat und 5 Gew.- % Aluminiumhydratpulver zu der in Beispiel 2 beschriebenen Mischung aus Bindemittel und Holzfasern (= 100 Gew.-%) ergibt eine schwer entflammbare Platte gemäß DIN 4102 mit ansonsten unveränderten Eigenschaften.

### Beispiel 7

Eine Mischung aus 1000 g eines feingemahlenen teerartigen Reaktionsrückstands aus der Herstellung von Bisphenol A durch Umsetzung von Aceton mit Phenol mit der folgenden Zusammensetzung:
10 Gew.-Teile Bisphenol A
1 Gew.-Teil 2-(2-hydroxyphenyl)-2-(4-hydroxyphenyl) propan
30 Gew.-Teile Chromanderivate
30 Gew.-Teile Indanderivate
5 Gew.-Teile Spirobisindan
5 Gew.-Teile Trisphenol
7 Gew.-Teile Dimethylxanthen
12 Gew.-Teile Di- und Trimeren von Phenol
12 g Natriumhydroxid als Katalysator
90 g Hexamethylentetramin und
2100 g Holzfasern
wird bei 15 bis 35 °C mit 2 bar zu plattenförmigen Prepregs vorverdichtet, ohne daß eine Vorkondensation eintritt, beidseitig mit einem phenolharzimprägnierten Underlaypapier und einem melaminharzimprägnierten Dekorpapier versehen und anschließend bei 180 °C und 50 bar 8 min lang verpreßt. Die erhaltene dekorative Platte hat gute mechanische Eigenschaften und besitzt eine dekorative Oberfläche, welche die Voraussetzungen nach DIN 53 799 erfüllt.

## Patentansprüche

1. Verfahren zur Herstellung eines Formkörpers mit einem gepreßten Kern aus festern inerten Teilchen auf der Basis von Holz, Cellulose, Kunststoff oder anorganischem Material, die von hitzegehärtetem Phenolharz umgeben sind, dadurch gekennzeichnet, daß ein Bindemittel aus Feststoffteilchen aus phenolischen Verbindungen auf der Basis von Bis-hydroxyarylalkanen und wenigstens eine Formaldehyd abspaltende Verbindung, wobei weder die phenolischen Verbindungen noch die Formaldehyd abspaltende Verbindung Wasser oder ein anderes Lösungsmittel enthalten, sowie einen Katalysator und gegebenenfalls Fließmittel, Farbpigmente, Hydrophobierungsmittel, Trennmittel, Flammschutzmittel und/oder Additive zur Verbesserung der Hitzebeständigkeit der phenolischen Verbindungen zusammen mit den inerten Teilchen im trockenen Zustand gemischt werden und die erhaltene Teilchenmischung zu dem Formkörper verpreßt wird, wobei während der Verpressung unter Hitzeeinwirkung die vollständige Vernetzung des Phenolharzes erfolgt.

2. Verfahren nach Anspruch 1, dadurch gekennzeichnet, daß die erhaltene Teilchenmischung zu Prepregs vorverdichtet wird und die erhaltenen Prepregs zu dem Formkörper unter vollständiger Vernetzung des Phenolharzes verpreßt werden.

3. Verfahren nach Anspruch 2, dadurch gekennzeichnet, daß bei der Vorverdichtung der Teilchenmischung zu Prepregs eine Vorkondensation der phenolischen Verbindungen mit Formaldehyd zu noch schmelzbaren Oligomeren erfolgt.

4. Verfahren nach einem der Ansprüche 1 bis 3, dadurch gekennzeichnet, daß die phenolischen Verbindungen Bis-hydroxyarylalkan und weitere bei der Herstellung des Bis-hydroxyarylalkans erhaltene Nebenprodukte der Formel a), b), c) d), e) und/oder f) 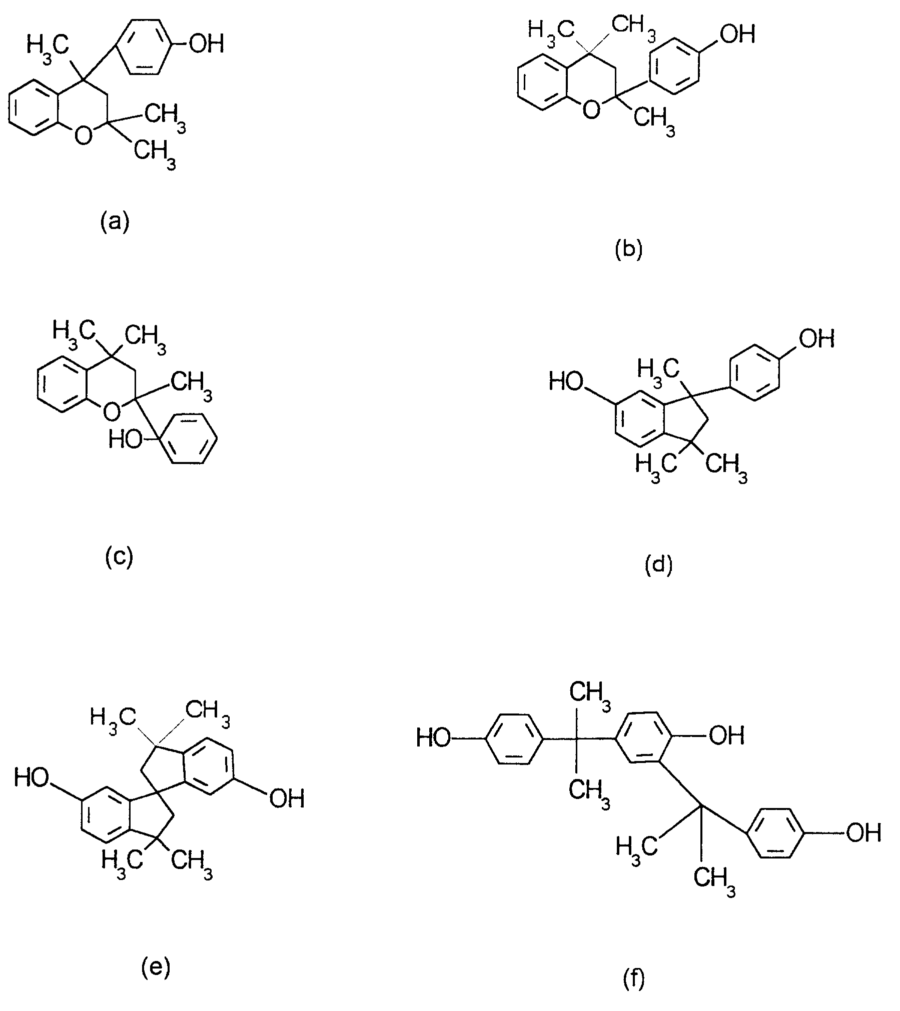 enthalten.

5. Verfahren nach Anspruch 4, dadurch gekennzeichnet, daß die phenolischen Verbindungen die bei der Kondensation von Phenol und Aceton zu 2,2-Bis(4-hydroxyphenol)propan entstandenen Nebenprodukte der im Anspruch 4 angegebenen Formeln a), b), c), d), e) und/oder f) enthalten.

6. Verfahren nach einem der Ansprüche 1 bis 5, dadurch gekennzeichnet, daß der Anteil der Bindemittelkomponenten, bestehend aus Bis-hydroxyarylalkan, den gegebenenfalls vorhandenen Nebenprodukten der Bis-hydroxyarylalkanherstellung gemäß der im Anspruch 4 angegebenen Formeln a), b), c), d), e) und/oder f) und der Formaldehyd abgebenden Verbindung 15 bis 90 Gew.%, bezogen auf das Gewicht der eingesetzten inerten Teilchen, beträgt.

7. Verfahren nach einem der Ansprüche 1 bis 6, dadurch gekennzeichnet, daß die Formaldehyd abspaltende Verbindung Hexamethylentetramin, Paraformaldehyd, Metaformaldehyd und/oder Oxazolidin ist.

8. Verfahren nach einem der Ansprüche 1 bis 7, dadurch gekennzeichnet, daß verschiedene in verschiedenen Temperaturbereichen Formaldehyd abspaltende Verbindungen eingesetzt werden.

9. Verfahren nach einem der Ansprüche 1 bis 8, dadurch gekennzeichnet, daß das Bis(hydroxyphenyl)alkan einen geradkettigen Alkanrest mit 1 bis 6, insbesondere 1 bis 4, C-Atomen oder einen Cycloalkanrest aufweist, wobei 2,2'-Bis(4-hydroxyphenyl)propan bevorzugt ist.

10. Verfahren nach einem der Ansprüche 1 bis 9, dadurch gekennzeichnet, daß das Verhältnis des Gesamtgewichts von Bis-hydroxyarylalkan und der gegebenenfalls zusätzlich eingesetzten Nebenprodukte der Bis-hydroxyarylalkanherstellung gemäß der im Anspruch 4 angegebenen Formeln a), b), c), d), e) und/oder f) zum Gewicht der eingesetzten, Formaldehyd abspaltenden Verbindung(en) im Bereich von 1:0.1 bis 1:6, liegt.

11. Verfahren nach einem der Ansprüche 1 bis 10, dadurch gekennzeichnet, daß man auf wenigstens einer Oberfläche des Kerns vor oder nach dem Verpressen eine dekorative Schicht aufbringt.

## Claims

1. A process for the production of a molded body having a pressed core of solid inert particles based on wood, cellulose, plastic or an inorganic material which are surrounded by a thermoset phenolic resin, wherein a binder comprising solid particles of phenolic compounds based on bishydroxyarylalkanes, and at least one compound which releases formaldehyde, where neither the phenolic compounds nor the compound which releases formaldehyde comprise water or another solvent, and also a catalyst and optionally flow agents, colored pigments, hydrophobicizing agents, release agents, flameproofing agents and/or additives for improving the heat resistance of the phenolic compounds are mixed together with the inert particles in the dry state and the mixture of particles obtained is pressed to form the molded body, the phenolic resin being completely crosslinked during pressing under the action of heat.

2. The process as claimed in claim 1, wherein the mixture of particles obtained is precompressed to give prepregs and the resulting prepregs are pressed to form the molded body, the phenolic resin being completely crosslinked in the process.

3. The process as claimed in claim 2, wherein during precompression of the mixture of particles to give prepregs the phenolic compounds are precondensed with formaldehyde to produce oligomers which are still fusible.

4. The process as claimed in one of claims 1 to 3, wherein the phenolic compounds comprise bishydroxyarylalkane and further by-products obtained in the preparation of the bishydroxyarylalkane, of the formula a), b), c), d), e) and/or f)

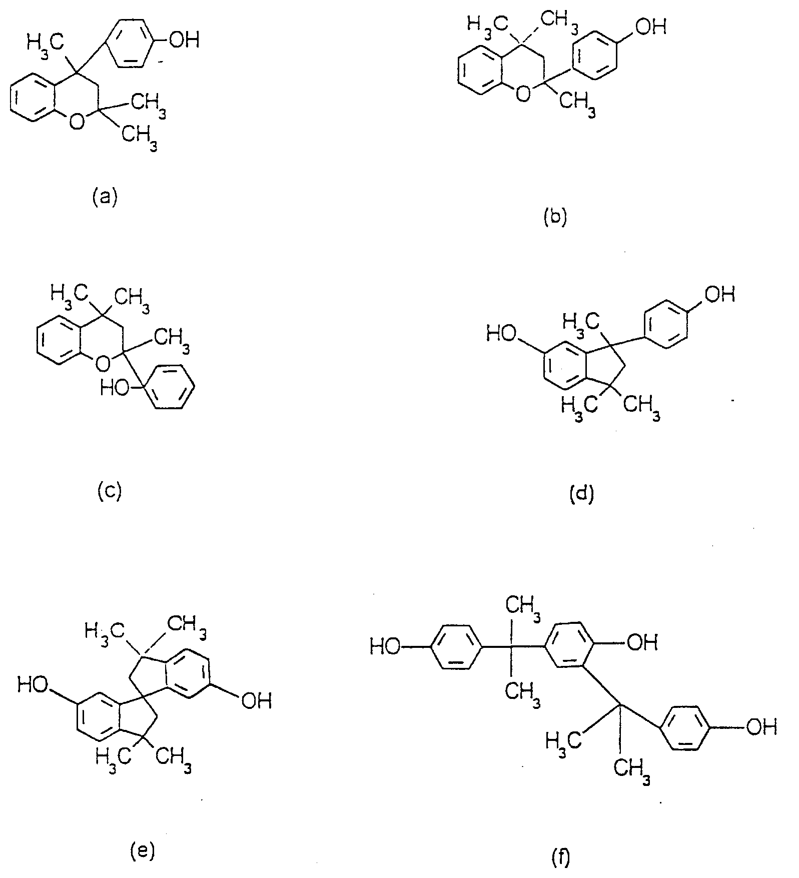

5. The process as claimed in claim 4, wherein the phenolic compounds comprise the by-products produced in the condensation of phenol and acetone to give 2,2'-bis(4-hydroxyphenyl)propane, of the formulae a), b), c), d), e) and/or f) given in claim 4.

6. The process as claimed in one of claims 1 to 5, wherein the amount of binder components comprising bishydroxyarylalkane, the by-products of bishydroxyarylalkane preparation which may be present, of the formulae a), b), c), d), e) and/or f) given in claim 4, and the compound which releases formaldehyde is 15 to 90 % by weight, relative to the weight of the inert particles used.

7. The process as claimed in one of claims 1 to 6, wherein the compound which releases formaldehyde is hexamethylenetetramine, paraformaldehyde, metaformaldehyde and/or oxazolidine.

8. The process as claimed in one of claims 1 to 7, wherein various compounds are used which release formaldehyde in different temperature ranges.

9. The process as claimed in one of claims 1 to 8, wherein the bis(hydroxyphenyl)alkane contains a straight-chain alkane radical having 1 to 6, in particular 1 to 4, carbon atoms or a cycloalkane radical, preference being given to 2,2'-bis(4-hydroxyphenyl)propane.

10. The process as claimed in one of claims 1 to 9, wherein the ratio of the total weight of bishydroxyarylalkane and the by-products of bishydroxyarylalkone preparation which are optionally used in addition, of the formulae a), b), c), d), e) and/or f) given in claim 4, to the weight of the compound(s) used which release(s) formaldehyde is in the range from 1:0.1 to 1:6.

11. The process as claimed in one of claims 1 to 10, wherein a decorative layer is applied to at least one surface of the core, either before or after pressing.

## Revendications

1. Procédé de préparation d'un article moulé avec un noyau pressé, composé de particules solides inertes à base de bois, cellulose, matière plastique ou matériau inorganique qui sont enrobées de résine phénolique thermo-durcie, caractérisé en ce que l'on mélange avec les particules inertes à l'état sec un liant composé de particules solides de composés phénoliques à base de bis-hydroxyarylalcanes et au moins un composé capable de libérer du formaldéhyde , où ni les composés phénoliques ni les composés capables de libérer du formaldéhyde ne contiennent d'eau ou un autre solvant, ainsi qu'avec un catalyseur et, éventuellement, des agents de fluidification, des colorants, des agents d'imperméabilisation, des agents de démoulage, des retardateurs d'inflammation et/ou des additifs pour améliorer la tenue à la chaleur des composés phénoliques, et le mélange de particules ainsi obtenu est comprimé pour obtenir le corps moulé, la résine phénolique étant totalement réticulée lors de l'étape de compression sous l'application de chaleur.

2. Procédé selon la revendication 1, caractérisé en ce que le mélange de particules obtenu est précomprimé sous forme de préimprégnés et les préimprégnés ainsi obtenus sont comprimés pour obtenir le corps moulé avec réticulation complète de la résine phénolique.

3. Procédé selon la revendication 2, caractérisé en ce que, lors de la précompression du mélange de particules sous forme de préimprégnés, il se produit une précondensation des composés phénoliques avec le formaldéhyde conduisant à des oligomères encore fusibles.

4. Procédé selon l'une des revendications 1 à 3, caractérisé en ce que les composés phénoliques contiennent un bis-hydroxyarylalcane et les sousproduits suivants de formules a), b), c), d) e) et/ou f) obtenus lors de la préparation du bis-hydroxyarylalcane

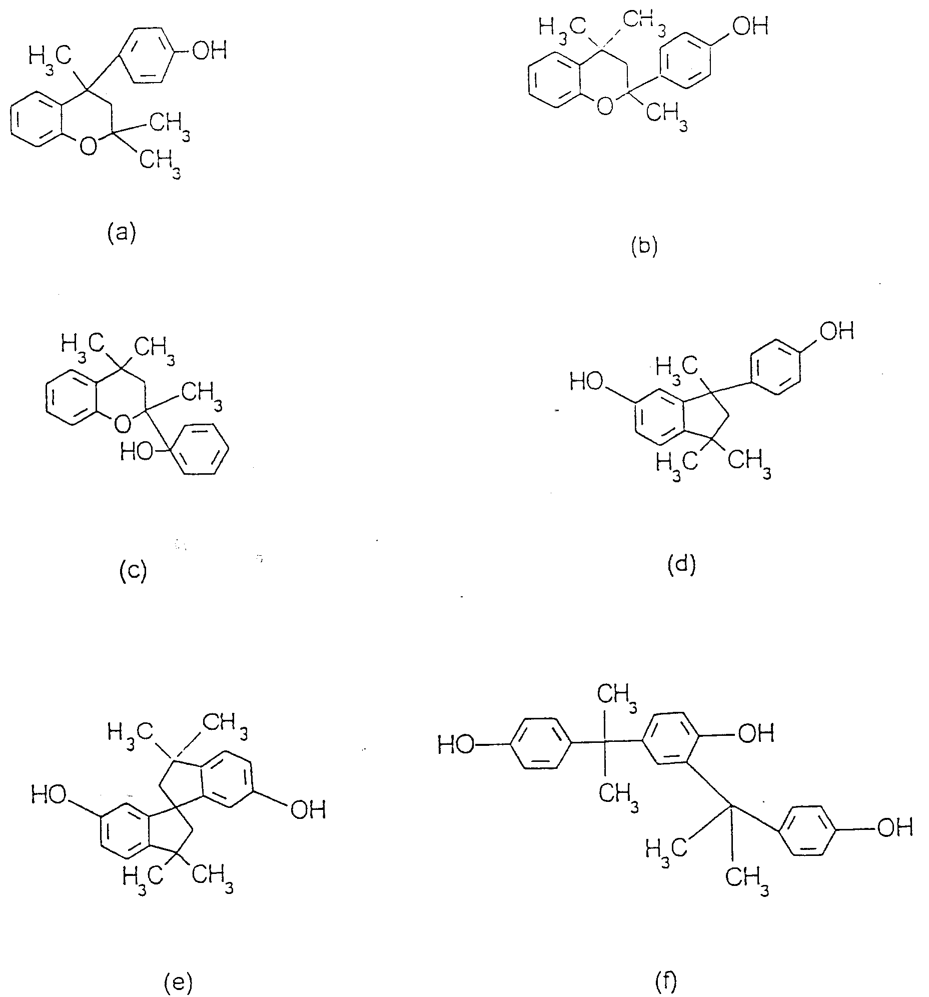

5. Procédé selon la revendication 4, caractérisé en ce que les composés phénoliques contiennent les sous-produits de formules a), b), c), d), e) et/ou f) indiquées à la revendication 4 qui sont obtenus lors de la condensation de phénol et d'acétone conduisant au 2,2-bis(4-hydroxyphénol)propane.

6. Procédé selon l'une des revendications 1 à 5, caractérisé en ce que la teneur en composants liants, composés de bis-hydroxyarylalcane, des sousproduits de préparation du bis-hydroxyarylalcane éventuellement présents de formules a), b), c), d) e) et/ou f) indiquées à la revendication 4, et du composé capable de libérer du formaldéhyde, est de 15 à 90 % en poids, par rapport au poids des particules inertes introduites.

7. Procédé selon l'une des revendications 1 à 6, caractérisé en ce que le composé capable de libérer du formaldéhyde est l'hexaméthylènetétramine le paraformaldéhyde, le métaformaldéhyde et/ou les oxazolidines.

8. Procédé selon l'une des revendications 1 à 7, caractérisé en ce que l'on introduit différents composés capables de libérer du formaldéhyde dans différents domaines de température.

9. Procédé selon l'une des revendications 1 à 8, caractérisé en ce que le bis(hydroxyphényl)alcane présente un groupe alcane à chaîne linéaire ayant 1 à 6, en particulier 1 à 4, atomes de carbone ou un groupe cycloalcane, le 2,2'-bis(4-hydroxyphényl)propane étant préféré.

10. Procédé selon l'une des revendications 1 à 9, caractérisé en ce que le rapport du poids total de bis-hydroxyarylalcane et de sous-produits de préparation du bis-hydroxyarylalcane de formules a), b), c), d), e) et/ou f) indiquées à la revendication 4, éventuellement introduits en outre, au poids de composé(s) capable(s) de libérer du formaldéhyde introduit(s) est de 1 : 0,1 à 1 : 6.

11. Procédé selon l'une des revendications 1 à 10, caractérisé en ce que l'on appose une couche décorative sur au moins une surface du noyau, avant ou après la compression.
